# EUROPÄISCHE PATENTANMELDUNG

(11) **EP 0 858 737 A1**
(43) Veröffentlichungstag der Anmeldung: **19.08.1998**
(21) Anmeldenummer: 98101914.4
(22) Anmeldetag: 04.02.1998
(51) Int. Cl.: A01N 1/02

(54) **Lösung zur Aufbewahrung von Organen**

(30) Priorität: 17.02.1997 DE 19706111
(71) Anmelder: Fresenius Medical Care Deutschland GmbH, 61350 Bad Homburg v.d.H. (DE)
(72) Erfinder: von Baeyer, Hans, Prof. Dr. med., 14052 Berlin (DE); Steinbach, Bernd, Dr., 61169 Friedberg (DE); Flaig, Hans-Jürgen, Dr., 36341 Lauterbach (DE)
(74) Vertreter: Laufhütte, Dieter, Dr.-Ing.

(57) **Zusammenfassung**

Die Erfindung betrifft eine Lösung zur Aufbewahrung von Organen, vorzugsweise Nieren. Um eine Organschädigung über einen möglichst langen Zeitraum wirksam zu verhindern, weist die Lösung einen hohen Sulfatanteil und einen niedrigen Chloridanteil auf.

## Beschreibung

Die Erfindung betrifft eine Lösung zur Aufbewahrung von Organen, die insbesondere zur Organkonservierung während der Explantation aus Spenderorganismen zur Transplantation oder zur extrakorporalen Organperfusion dienen soll.

Bei der Explantation von Organen aus einem Spenderorganismus, beispielsweise einer Niere, einem Herz, einer Leber oder eines Pankreas, tritt regelmäßig und bisher unbeeinflußbar eine ischämische Organschädigung ein. Das Ausmaß dieser Schädigung ist von der sogenannten "warmen Ischämiezeit" abhängig. Diese ist definiert als der Zeitraum zwischen der Abklemmung der versorgenden Arterie und dem Beginn der Abkühlung des isolierten Organs, sei es durch Kältelagerung allein, oder durch Kältelagerung in Verbindung mit der Perfusion einer Konservierungslösung. Als Konservierungslösung ist beispielsweise die sogenannte UW-Lösung oder die Euro-Collins-Lösung bereits gebräuchlich.

Ursächlich für die ischämische Schädigung ist das Fortlaufen energieverbrauchender Stoffwechselreaktionen im plötzlich ischämisch gewordenen Gewebe. Nach Wegfall der aeroben Glykolyse tritt die anaerobe Glykolyse als energieliefernde der aeroben Glykolyse tritt die anaerobe Glykolyse als energieliefernde Reaktion ein. Dabei entstehen gewebeschädigende Metaboliten, die aufgrund ihres Säurecharakters den Zell-pH erniedrigen, wie z.B. Milchsäure. Bei vorhandener Durchblutung werden die Metaboliten abtransportiert und in der Leber entgiftet (Cori Cyclus).

Für die sofortige Wederaufnahme der Organfunktion nach der Explantation im Empfängerorganismus oder in der Perfusionsapparatur ist die Vermeidung einer ischämischen Schädigung unabdingbar.

Ein weiterer Anwendungsbereich der Organkonservierung betrifft die Verwendung von Schlachthoforganen als Tierversuchsersatz. Um derartige Untersuchungen an Schlachthoforganen durchzuführen, ist eine Organkonservierung unmittelbar nach der Schlachtung erforderlich. Diese Organe, an denen die Untersuchungen durchgeführt werden sollen, müssen möglichst lange in physiologischer Umgebung mit unveränderten Stoffwechseleigenschaften gehalten werden.

Aufgabe der Erfindung ist es, eine Lösung zur Aufbewahrung von Organen, d.h. eine sogenannte organoplegische Lösung, an die Hand zu geben, die es ermöglicht, Organe möglichst lange in physiologischer Umgebung mit unveränderten Stoffwechseleigenschaften zu halten.

Erfindungsgemäß wird diese Aufgabe durch das Kennzeichen Anspruchs 1 gelöst. Demnach wird eine Lösung mit hohem Sulfat- und Magnesium- und Kaliumanteil und niedrigem Chlorid- und Natriumanteil bereitgestellt. Es soll damit der energieabhängige, transmembranale Ionentransport blockiert werden, so daß der Zwang zum Energieverbrauch für das ischämische Gewebe entfällt. Dies wird durch Transport-Blockade der folgenden Ionenkanäle erreicht:

| Ionenspezies | Blockade |
|---|---|
| Magnesium | Calcium-Kanäle |
| Sulfat | Anionen-Kanäle |
| Kalium | Natrium-Kanal |

Die Transportblockade der bezeichneten Ionenkanäle hemmt den durch transmebranale Ionentransport bedingten Sauerstoffverbrauch. Die durch den anaeroben Sauerstoffverbrauch im ischämischen Gewebe bedingte Schädigung, wie sie einleitend beschrieben wurde, werden durch die entsprechenden erfindungsgemäßen Lösungen daher wirksam unterbunden.

Eine besonders vorteilhafte Ausgestaltung der Erfindung ergibt sich aus einer Zusammensetzung der Lösung, bei der auf 1000 ml Lösung bei einem pH-Wert von ca. 7,40 zumindest die folgenden Bestandteile enthalten sind:

| Spezies | Konzentrationsbereich | Osmolaritätsbereich |
|---|---|---|
| Na⁺ | ca. 2-30 mmol/l | 2-30 mOsm |
| K⁺ | ca. 70-130 mmol/l | 70-130 mOsm |
| Mg⁺⁺ | ca. 30-40 mmol/l | 60-80 mOsm |
| Cl⁻ | ca. 2-20 mmol/l | 2-20 mOsm |
| SO₄⁻⁻ | ca. 80-95 mmol/l | 60-70 mOsm |
| Raffinose | ca. 20-60 mmol/l | 30-60 mOsm |

Hier wird durch die verhältnismäßig hohe Kaliumkonzentration der Natriumtransport zusätzlich gehemmt. Somit liegt ein weiterer Mechanismus vor, der die Wirksamkeit der Lösung noch weiter steigert.

Weitere vorteilhafte Ausgestaltungen ergeben sich aus den sich anschließenden Unteransprüchen.

Die Applikation der erfindungsgemäßen Lösung kann bei der Verwendung der zur Konservierung von Schlachthoforganen entsprechend den regionalen schlachtrechtlichen Vorschriften beispielsweise auf die folgenden beiden Arten erfolgen:
1. Die Lösung wird mittels eines Blutgefäßkatheters in den Spenderorganismus eingebracht. Bei Personen, bei denen der Hirntod festgestellt wurde, ist eine besondere Narkose nicht erforderlich. Bei Schlachthoftieren ist eine übliche Betäubung, z.B. mit Elektroschock, erforderlich.
   Der Gefäßzugang wird über die Punktion der Arteria femoralis vorgenommen. Der Gefäßkatheter, der ein einlumiger Shaldon-Dialysekatheter sein kann, wird bis in die Höhe der Bauchaorta in den Bereich der Abgänge der Nierenarterien vorgeschoben. Nach Erreichen dieser Region, kenntlich an der für die Bauchaorta typischen Druckamplitude, die mit einem angeschlossenen Druckaufnehmer gemessen wird, wird die erfindungsgemäße "organoplegische Lösung" mit einer Flußrate von 300 ml/min z.B. mittels einer Rollerpumpe infundiert. Gleichzeitig wird durch einseitigen Schnitt in die Halsgefäße mit Durchtrennung der Arteria carotis und der Venae iugularis das Spendertier schnell entblutet. Der Infusionsvorgang wird bis zur vollständigen Entblutung fortgesetzt. Dies ist kenntlich am Herzstillstand, der ebenfalls durch die Infusion bewirkt wird.
2. Ist eine Infusion des Schlachttieres nicht gestattet, wird nach der Eröffnung der Bauchhöhle mittels Medianschnitt sofort die arterielle Zuleitung des zu entnehmenden Organs kanüliert und die Infusion mittels Pumpe gestartet. Danach wird das Organ durch Trennung der übrigen Gefäße (im Fall der Niere, Vene und Harnleiter) herausgelöst.
   Die Organe werden solange mit der organoplegischen Lösung perfundiert bis der venöse Auslauf makroskopisch blutfrei ist.
   Das Organ wird danach in einem Plastikbehälter auf Eis gelagert.
   Beim Anschluß wird mit Perfusionsblut solange perfundiert bis der venöse Auslauf wieder Blutcharakter hat. Sodann kann das Organ in den geschlossenen Perfusionskreislauf verbracht werden.

Die Verwendung der erfindungsgemäßen Lösung ermöglicht die Entnahme von Schlachthoforganen zur Organperfusions als Tierersatzmethode. Weiterhin verbessert sie auch die Ergebnisse der Organtransplantation, insbesondere Nierentransplantation, in der Humanmedizin.

## Patentansprüche

1. Lösung zur Aufbewahrung von Organen, vorzugsweise Nieren,
**dadurch gekennzeichnet,**
daß sie einen hohen Sulfatanteil und einen niedrigen Chloridanteil aufweist.

2. Lösung nach Anspruch 1, dadurch gekennzeichnet, daß der Sulfatanteil mindestens 80 mM und der Chloridanteil weniger als 20 mM aufweist.

3. Lösung nach Anspruch 1 oder Anspruch 2, bei der auf 1000 ml Lösung bei einem pH-Wert von ca. 7,40 zumindest die folgenden Bestandteile enthalten sind:
| Spezies | Konzentrationsbereich | Osmolaritätsbereich |
|---|---|---|
| Na⁺ | ca. 2-30 mmol/l | 2-30 mOsm |
| K⁺ | ca. 70-130 mmol/l | 70-130 mOsm |
| Mg⁺⁺ | ca. 30-40 mmol/l | 60-80 mOsm |
| Cl⁻ | ca. 2-20 mmol/l | 2-20 mOsm |
| SO₄⁻⁻ | ca. 80-95 mmol/l | 60-70 mOsm |
| Raffinose | ca. 20-60 mmol/l | 30-60 mOsm |

4. Lösung nach einem der vorangehenden Ansprüche, bei der auf 1000 ml Lösung bei einem pH-Wert von ca. 7,40 zumindest die folgenden Bestandteile enthalten sind:
| Spezies | bevorzugte Konzentration | bevorzugte Osmolarität |
|---|---|---|
| Na⁺ | 10 mmol/l | 10 mOsm |
| K⁺ | 100 mmol/l | 100 mOsm |
| Mg⁺⁺ | 35 mmol/l | 70 mOsm |
| Cl⁻ | 10 mmol/l | 10 mOsm |
| SO₄⁻⁻ | 85 mmol/l | 65 mOsm |
| Raffinose | 50 mmol/l | 50 mOsm |

5. Lösung nach Anspruch 3 oder 4, dadurch gekennzeichnet, daß sie 10 Gew.% Polyethylenglykol mit einem Molekulargewicht von ca. 4.600 enthält.

6. Lösung nach einem der Ansprüche 3 bis 5, dadurch gekennzeichnet, daß der pH-Wert über einen Phosphatpuffer eingestellt ist.

7. Lösung nach einem der vorangehenden Ansprüche bestehend aus 10 mM NaCl (20 mOsm), 35 mM MgSO₄ (70 mOsm), 50 mM KSO₄ (150 mOsm), 50 mM Raffinose (50 mOsm), 10 % Polyethylenglykol in Phosphatpuffer (3 mM) pH 7,4 und mit einer Gesamtosmolarität von etwa 290 mOsm.
